(19) Europäisches Patentamt
European Patent Office
Office européen des brevets

(11) **EP 3 035 666 B1**

(12) **FASCICULE DE BREVET EUROPEEN**

(45) Date de publication et mention de la délivrance du brevet:
**06.02.2019 Bulletin 2019/06**

(51) Int Cl.:
***H04N 5/232*** (2006.01)   ***G06T 5/00*** (2006.01)
***G06T 5/20*** (2006.01)   ***G06T 5/50*** (2006.01)
***H04N 5/235*** (2006.01)

(21) Numéro de dépôt: **15186050.9**

(22) Date de dépôt: **21.09.2015**

(54) **PROCEDE D'ESTIMATION DE FLOU INDEPENDANT DU CONTENU DE LA SCENE ET UTILISATION DANS UN SYSTEME DE MISE AU POINT AUTOMATIQUE**

VERFAHREN ZUM EINSCHÄTZEN DER UNABHÄNGIGEN UNSCHÄRFE DES INHALTS DER SZENE, UND ANWENDUNG IN EINEM AUTOMATISCHEN FEINEINSTELLUNGSSYSTEM

METHOD FOR ESTIMATING BLUR REGARDLESS OF THE CONTENT OF THE SCENE AND USE IN AN AUTOFOCUS SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2014 FR 1462654**

(43) Date de publication de la demande:
**22.06.2016 Bulletin 2016/25**

(73) Titulaire: **STMicroelectronics (Grenoble 2) SAS 38000 Grenoble (FR)**

(72) Inventeurs:
• **TEYSSIER, Jérémie**
  **38000 GRENOBLE (FR)**
• **CASCIO, Francesco**
  **38100 GRENOBLE (FR)**

(74) Mandataire: **Casalonga
Casalonga & Partners
Bayerstraße 71/73
80335 München (DE)**

(56) Documents cités:
**US-A1- 2013 063 566   US-A1- 2013 308 005
US-A1- 2014 210 999**

**EP 3 035 666 B1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

L'invention est relative aux techniques de mise au point automatique pour objectifs d'appareil photo ou de caméra, et plus particulièrement aux techniques de mise au point directe basées sur des critères permettant d'estimer le degré de flou ou de netteté d'une image.

**Arrière-plan**

La demande de brevet US 2013-0329122 décrit un système de mise au point directe censé, à partir d'une signature spectrale d'une première image saisie avec une mise au point quelconque, estimer la correction à apporter à l'objectif pour saisir une deuxième image nette.
Le système utilise une machine à apprentissage statistique configurée à partir de nombreux échantillons de signatures spectrales produites pour une multitude de scènes de référence placées à différentes distances de l'objectif et saisies avec plusieurs degrés de flou.
Un tel système peut se révéler inefficace pour certains types de scène.
Le document US2013/063566 A1 divulgue un procédé d'estimation de profondeur consistant à acquérir deux images à différentes longueurs focales, à calculer les spectres respectifs de chacune des deux images, à calculer le rapport des spectres et à estimer la profondeur à partir de la moyenne du module du rapport des spectres.
Le document D2 US2014/210999 A1 divulgue un appareil de traitement d'image qui calcule une distance dans une direction de profondeur d'un objet dans une image en utilisant une pluralité d'images dont la quantité de flou est différente.

**Résumé**

L'invention consiste en un procédé de réglage d'un objectif selon les revendications 1 à 4.

**Description sommaire des dessins**

Des modes de réalisation seront exposés dans la description suivante, faite à titre non limitatif en relation avec les figures jointes parmi lesquelles :

- la figure 1 illustre des fonctions spatiales intervenant dans la formation d'une image d'une scène à travers un objectif ;

- les figures 2A à 2D illustrent des étapes dans l'élaboration d'un critère de flou indépendant du contenu de la scène ;

- les figures 3A et 3B représentent, pour chacun de deux éloignements de la scène par rapport à l'objectif, une série de critères de flou du type de la figure 2D mesurés pour plusieurs types de scène et plusieurs positions de mise au point de l'objectif ;

- la figure 4A illustre deux ensembles de critères de référence tels que produits dans un exemple de phase de configuration ; et

- la figure 4B illustre une autre représentation des ensembles de critères de la figure 4A, telle qu'exploitée par un système de mise au point automatique.

**Description de modes de réalisation**

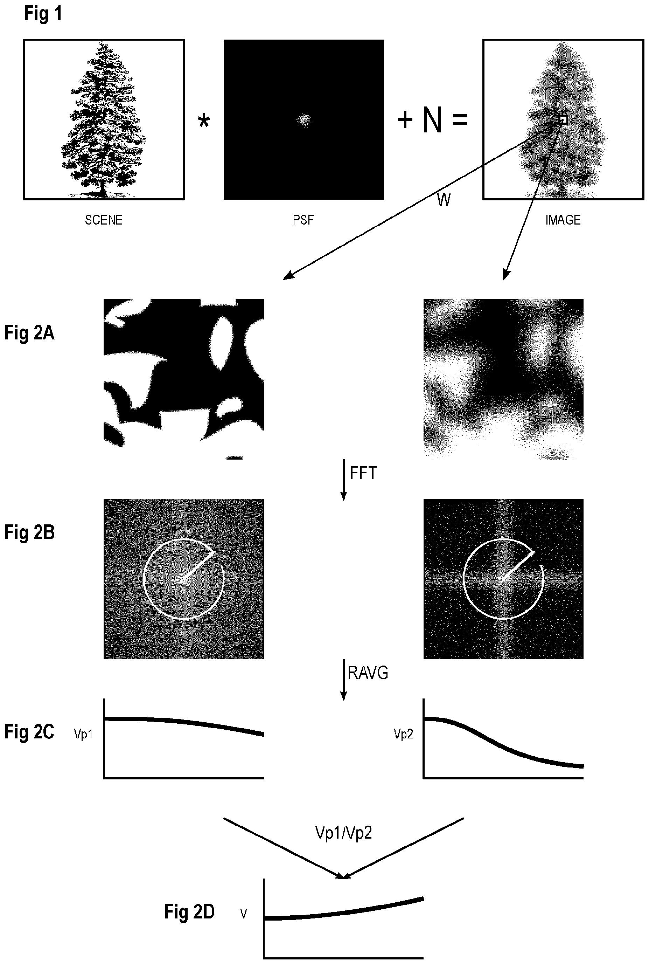

La figure 1 illustre des fonctions spatiales intervenant dans la formation d'une image d'une scène à travers un objectif. L'image résulte d'un produit de convolution bidimensionnel (*) de la scène par la fonction d'étalement du point PSF (« Point Spread Function »), auquel s'ajoute du bruit N. La fonction d'étalement du point est une surface qui représente la fonction de transfert optique de l'objectif avec son réglage courant. Si le réglage est optimal et l'objectif idéal, la fonction PSF se résume à une raie centrale d'amplitude 1. Si le réglage n'est pas optimal, la fonction PSF est généralement une fonction d'Airy plus ou moins étalée.
Ainsi, le système optique peut être décrit par l'équation suivante :

$$IMAGE = SCENE * PSF(x, d) + BRUIT$$

où $x$ désigne la position de mise au point de l'objectif dans sa plage de réglage et $d$ la distance de la scène par rapport à l'objectif.

Dans le domaine fréquentiel, par exemple en utilisant une transformée de Fourier F, cette équation devient :

$$_F(IMAGE) = {_F}(SCENE) \bullet {_F}(PSF(x, d)) + {_F}(BRUIT).$$

Les transformés de Fourier sont opérées sur des fenêtres de même taille, qui peuvent correspondre à la matrice de pixels saisie par le capteur ou à une zone d'intérêt plus restreinte. Dans ce cas, SCENE peut être l'image nette telle que reçue par le capteur dans la configuration optimale de l'objectif.

Une transformée de Fourier bidimensionnelle produit une matrice de coefficients complexes représentatifs de l'amplitude et de la phase des composantes fréquentielles.

Le produit de convolution (*) de deux images dans le domaine spatial devient un produit simple ou élément par élément, noté ici « • », de la première transformée par la deuxième dans le domaine fréquentiel. La matrice résultante est donc telle que chacun de ses coefficients est égal au produit des coefficients de même position de la première et la deuxième transformée.

Si on fait le rapport des équations obtenues dans le domaine fréquentiel pour deux positions de mise au point de l'objectif et la même scène, on obtient :

$$\frac{\mathcal{F}(IMAGE1)}{\mathcal{F}(IMAGE2)} = \frac{\mathcal{F}(SCENE) \bullet \mathcal{F}\big(PSF(x1,d)\big) + \mathcal{F}(BRUIT1)}{\mathcal{F}(SCENE) \bullet \mathcal{F}\big(PSF(x2,d)\big) + \mathcal{F}(BRUIT2)}$$

Si on néglige le bruit, les termes F (SCENE) se simplifient et disparaissent dans le deuxième membre. On obtient :

$$\frac{\mathcal{F}(IMAGE1)}{\mathcal{F}(IMAGE2)} \approx \frac{\mathcal{F}\big(PSF(x1,d)\big)}{\mathcal{F}\big(PSF(x2,d)\big)}$$

On remarque que le rapport des transformées des deux images est indépendant, au bruit près, du contenu de la scène - il est sensiblement égal au rapport des transformées des fonctions PSF qui dépendent seulement de la configuration de l'objectif.

On propose ci-après de définir et exploiter un critère représentatif du rapport des transformées de deux images de la même scène. Par « rapport » des transformées on entend le filtrage de la première transformée par le filtre inverse de la deuxième transformée. Cela revient à diviser chaque coefficient de la première transformée par le coefficient de même position de la deuxième transformée, opération qu'on qualifiera par « rapport simple ». Ce critère pourra servir à quantifier le degré de flou d'une image de manière objective dans un procédé de mise au point automatique.

Pour définir le critère de flou objectif recherché, on ne tient pas compte du contenu complet des transformées. On s'intéresse seulement aux spectres de puissance, qui permettent des simplifications de calcul tout en préservant l'efficacité du critère de flou.

Les figures 2A à 2D illustrent des étapes de traitement de deux images d'une même scène pour établir un critère de flou objectif. Les images diffèrent par le réglage de mise au point de l'objectif. L'image est plus nette à gauche et plus floue à droite.

A la figure 2A, une fenêtre de travail restreinte W de l'image saisie par le capteur est prise pour les opérations, par exemple une fenêtre de 128x128 pixels au centre de l'image ou dans une zone d'intérêt au choix.

A la figure 2B, on calcule le spectre de puissance bidimensionnel de la fenêtre W, par exemple à partir d'une transformée de Fourier FFT.

A la figure 2C, on opère une moyenne radiale du spectre de puissance. La moyenne radiale forme une signature spectrale monodimensionnelle de la fenêtre et est représentée sous la forme d'un vecteur Vp. Ce vecteur peut avoir jusqu'à 64 composantes pour une fenêtre de 128x128 pixels, c'est-à-dire la moitié de la largeur de la fenêtre.

Les techniques de mise au point directes décrites dans la demande de brevet US 2013-0329122 utilisent un critère de flou similaire au vecteur Vp. La nature du vecteur Vp dépend du contenu fréquentiel de la scène. Ainsi les techniques de la demande de brevet susmentionnée rencontrent des limites du fait que des scènes différentes photographiées dans les mêmes conditions de mise au point produisent des vecteurs Vp très différents.

A la figure 2D, on parvient à former un critère indépendant du contenu fréquentiel de la scène en calculant un rapport entre les deux vecteurs Vp1 et Vp2 produits à l'étape précédente. Ce «rapport» est défini en fait comme le filtrage du vecteur Vp1 par le filtre inverse du vecteur Vp2, c'est-à-dire qu'il produit un vecteur V dont chaque composante est le rapport des composantes de même position des vecteurs Vp1 et Vp2.

L'essentiel d'une image étant représenté par les premières fréquences du spectre, on peut se contenter de conserver moins de composantes dans les vecteurs, par exemple seulement la moitié (32). Cela supprime en outre des composantes de fréquence élevée principalement dues au bruit.

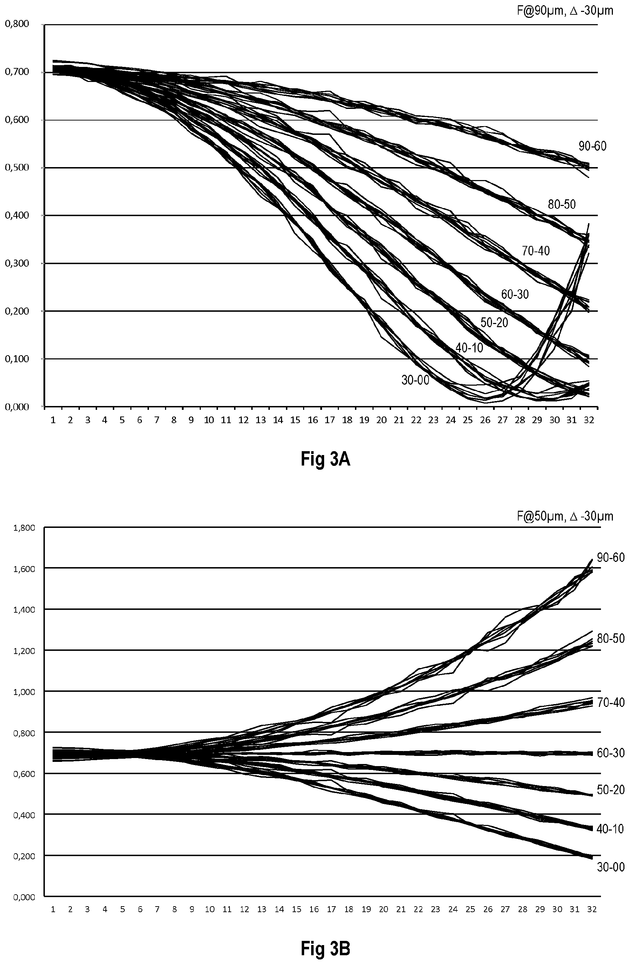

Les figures 3A et 3B servent à démontrer le caractère objectif du critère V, c'est-à-dire son indépendance vis à vis de la scène photographiée. Elles représentent sous forme de courbes les composantes de vecteurs V obtenus par des essais effectués sur une dizaine de scènes de référence de différents types.

Les scènes ont été photographiées avec un objectif de distance focale de 2,94 mm muni d'une lentille ayant une course de mise au point de 90 μm. La position de la lentille peut varier de 0 à 90 μm par pas de 10 μm, la position 0 correspondant à la position de mise au point à l'infini.

La fenêtre de travail a une taille de 128x128 pixels et les vecteurs V ont 32 composantes identifiées par leurs rangs sur les axes des abscisses. Ainsi le critère V ne tient pas compte de la moitié plus élevée des composantes spectrales présentes dans la fenêtre.

Tous les critères ou vecteurs V ont été produits en utilisant le même pas de référence Δ de -30 μm entre les positions de la lentille, signifiant que la deuxième image servant au critère est prise en déplaçant la lentille de 30 μm vers la position 0 depuis la position utilisée pour prendre la première image. Les vecteurs sont identifiés par la notation X-Y, où X et Y sont le couple de positions de la lentille utilisées pour prendre les première et deuxième images intervenant dans le critère. Le rapport utilisé pour produire les critères V est celui de la deuxième image sur la première.

A la figure 3A, les différentes scènes de référence ont été placées à 99 mm de l'objectif. La position de netteté de la lentille dans ces conditions, notée F@ sur les graphes, est 90 μm. Dans la plage de réglage de la lentille, en utilisant un pas Δ de -30 μm, sept positions de départ sont possibles, de 30 à 90 μm par pas de 10 μm. Les vecteurs obtenus sont identifiés par 30-00 à 90-60.

On constate qu'à chaque couple de positions de mise au point correspond un faisceau étroit de vecteurs, en fait les vecteurs produits par les différentes scènes. De plus, les faisceaux associés aux différents couples de positions sont clairement différenciables, ce qui facilite l'utilisation du critère V dans les applications envisagées ci-après.

En absence de bruit et en théorie, d'après les équations utilisées, tous les vecteurs d'un même faisceau devraient être confondus. Les écarts mesurés entre les vecteurs d'un même faisceau sont dus au bruit, incluant le bruit du capteur d'image et le bruit introduit par les approximations faites dans les calculs. Lorsque le rapport signal sur bruit diminue, ce qui se produit lorsque la scène est faiblement éclairée, on constatera une plus grande dispersion entre les vecteurs d'un même faisceau. On pourra cependant toujours trouver dans la scène une partie claire pour placer la fenêtre de travail W, et ainsi augmenter le rapport signal sur bruit.

A la figure 3B, les différentes scènes de référence ont été placées à 175 mm de l'objectif. La position de netteté F@ de la lentille dans ces conditions est 50 μm. On dispose toujours de sept positions de départ, et les vecteurs obtenus sont identifiés par 30-00 à 90-60.

On constate de nouveau qu'à chaque couple de positions de mise au point correspond un faisceau étroit de vecteurs et que les faisceaux sont clairement différenciables.

Des résultats similaires sont obtenus pour les autres positions de netteté de la lentille.

On constate en outre que les courbes sont monotones de façon générale, sauf pour les faisceaux 30-00 et 40-10 de la figure 3A. Ces faisceaux correspondent en fait aux deux positions les plus éloignées de la position de netteté. Si on tient compte des valeurs des composantes au-delà de 32 des vecteurs V, c'est-à-dire en prenant un rayon plus grand pour les moyennes radiales, on constate que les courbes changent de tendance, comme pour les courbes 30-00 et 40-10 de la figure 3A. On constate également que la dispersion des vecteurs d'un même faisceau est plus élevée dans la zone au-delà de la composante 32, de sorte qu'il devient difficile de différencier les faisceaux.

Ainsi, dans un algorithme d'analyse utilisant ces vecteurs V, on peut limiter les composantes du vecteur V à une plage où les faisceaux sont plus étroits et différenciables, ou bien accorder un poids plus faible aux composantes au-delà.

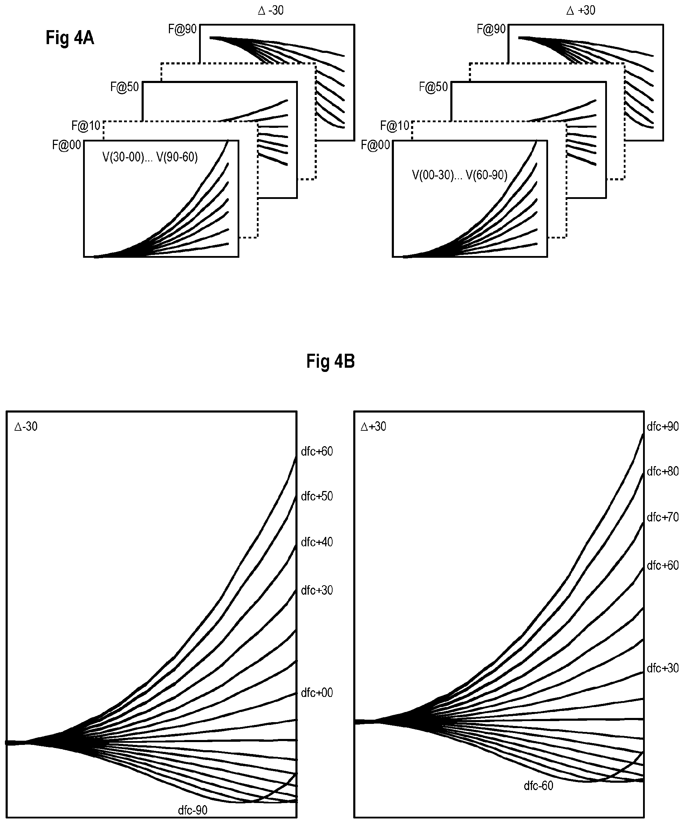

Les figures 4A et 4B illustrent une application pratique de ces explorations pour estimer l'erreur de réglage d'un objectif, par exemple dans un système de mise au point automatique.

A la figure 4A, on peut construire, pour un pas de référence Δ et pour chaque position de netteté envisageable de l'objectif, un ensemble de vecteurs ou courbes de référence. Chaque ensemble est désigné par la position de netteté correspondante F@, et chaque courbe de l'ensemble est désignée V(X-Y), où X et Y sont les première et deuxième positions de mise au point utilisées. L'écart entre les positions X et Y est constant et égal au pas de référence Δ. La figure 4A montre en fait deux exemples de séries de courbes de référence, l'une pour un pas de -30 μm, et l'autre pour un pas de +30 μm.

Chaque ensemble de courbes de référence est ainsi semblable au jeu de courbes de la figure 3A ou 3B, chaque faisceau étant remplacé par une courbe de référence représentant une moyenne des courbes du faisceau. La courbe de référence peut être stockée avec l'écart-type relevé en établissant la moyenne, écart-type qui pourra servir par la suite dans des techniques pour comparer une courbe mesurée aux courbes de référence.

Si le système peut toujours utiliser la même position de départ de la lentille au moment de la prise de vue, seules les courbes correspondant à la position de départ choisie sont utiles, de sorte que le système peut ne stocker qu'une seule des courbes de chacun des ensembles, par exemple les courbes médianes associées à la position de départ 60.

Alors, au moment de la prise de vue, le système place la lentille sur la position de départ choisie, saisit la première image dans la fenêtre de travail, décale la lentille du pas Δ, saisit la deuxième image dans la même fenêtre, calcule le critère V, et confronte ce critère aux courbes de référence stockées. La courbe de référence la plus « proche » fournit alors, par son ensemble d'appartenance, la position de netteté F@ à utiliser pour la prise de vue finale.

Lorsque le système n'est pas maître du choix de la position de départ, par exemple lors de la saisie d'une vidéo où la mise au point est effectuée de manière continue, il est utile d'avoir des courbes de référence pour toutes les positions de départ possibles. Alors le système saisit directement la première image à la position courante de la lentille, décale la lentille du pas de référence pour saisir la deuxième image, et confronte le critère mesuré aux courbes de référence correspondant à la position de départ effectivement utilisée dans les différents ensembles.

Compte tenu du choix du pas Δ, les positions de départ associées aux courbes de référence sont limitées dans une plage tronquée par le pas, par exemple entre 30 et 90 μm pour un pas de -30 μm - il manque la plage entre 0 et 20 μm pour compléter l'ensemble des possibilités de réglage de la lentille.

Pour couvrir cette plage manquante, comme cela est représenté à droite de la figure 4A, on peut construire une deuxième série d'ensembles de courbes de référence, basées sur un pas de référence différent, choisi pour que les positions de départ manquantes soient couvertes. On peut par exemple choisir un pas Δ de +30 μm, offrant une gamme de courbes de référence correspondant à des positions de départ de 0 à 60 μm.

Alors, en fonctionnement, si la position courante de la lentille n'est pas dans la plage couverte par la série associée au pas -30 μm, le système peut appliquer un pas de +30 μm et basculer sur la série de courbes correspondante pour y trouver celles qui correspondent à la position courante.

A la prise de vue finale de l'image, le critère de flou peut de nouveau être calculé pour le confronter aux courbes de référence. Normalement la courbe trouvée devrait confirmer que la position est bonne, c'est-à-dire indiquer une correction nulle. Si ce n'est pas le cas, c'est que l'image comporte trop de bruit ou qu'elle a bougé - l'image courante peut alors servir de première image dans une nouvelle tentative de mise au point.

La correction de position opérée pour saisir l'image finale est quelconque, de sorte que la position finale ne peut servir de nouvelle deuxième position pour calculer le nouveau critère que si la correction correspond à un pas Δ associé à un jeu de courbes de référence. Si ce n'est pas le cas, la position finale ne permet pas de calculer un nouveau critère immédiatement, mais elle peut servir de première image pour initier la production d'un nouveau critère. Dans d'autres applications, on pourra stocker des jeux de courbes associés aux corrections possibles. Alors, un nouveau critère pourra être calculé dès la saisie de l'image finale.

On a décrit en relation avec la figure 4A un procédé s'appuyant sur une base de données exhaustive de courbes de référence que l'on pourra utiliser en toutes circonstances. Dans de nombreuses applications où l'objectif est de configuration simple, comme dans les cas envisagés ici, on peut faire une approximation qui rend de nombreuses courbes redondantes.

En effet, si on revient aux figures 3A et 3B, on s'aperçoit que les faisceaux 70-40 à 90-60 de la figure 3A sont approximativement les mêmes que les faisceaux 30-00 à 50-20 de la figure 3B.

Cela s'explique par le fait que les rapports calculés pour les critères V correspondent également aux rapports des spectres des fonctions d'étalement du point (PSF), et que ces fonctions PSF dépendent, selon une approximation, de la position relative de la lentille par rapport à la position de netteté, quelle que soit la distance d de la scène. En d'autres termes, si x est la position absolue de la lentille et $x_d$ la position de netteté pour la distance courante *d* de la scène, en notant la position relative *dfc* = x - $x_d$, on peut écrire :

$$PSF(x, d) = PSF(x_d + dfc, d)$$
$$\approx PSF(x_{d1} + dfc, d1) \approx PSF(x_{d2} + dfc, d2)\ldots$$
$$\approx PSF(dfc, \infty),\ \text{puisque } x_d = 0\ \text{pour une distance } d \text{ infinie.}$$

On utilise ci après la notation *PSF{dfc}* pour exprimer la fonction PSF indépendante de la distance *d* associée à la position relative *dfc.*

Ainsi, par exemple, les vecteurs 80-50 de la figure 3A, où la position de netteté est de 90 μm, s'expriment par :

$$\frac{\mathcal{F}(\mathrm{PSF}\{80-90\})}{\mathcal{F}(\mathrm{PSF}\{50-90\})} = \frac{\mathcal{F}(\mathrm{PSF}\{-10\})}{\mathcal{F}(\mathrm{PSF}\{-40\})}$$

Les vecteurs 40-10 de la figure 3B, où la position de netteté est de 50 μm, s'expriment quant à eux par :

$$\frac{\mathcal{F}(\mathrm{PSF}\{40-50\})}{\mathcal{F}(\mathrm{PSF}\{10-50\})} = \frac{\mathcal{F}(\mathrm{PSF}\{-10\})}{\mathcal{F}(\mathrm{PSF}\{-40\})}$$

Les vecteurs 80-50 de la figure 3A appartiennent ainsi au même faisceau que les vecteurs 40-10 de la figure 3B.

En revenant à la figure 4A, chaque courbe de référence peut alors caractériser l'écart de la deuxième position par rapport à la position de netteté, en d'autres termes l'erreur de mise au point, quelle que soit la position de netteté. Avec cette définition, une même courbe de référence, ou d'erreur de mise au point, peut être présente dans plusieurs ensembles de la figure 4A, alors qu'une seule version n'est en réalité utile. Chaque courbe d'erreur est notée ci-après *dfcX*, où *X* est l'écart signé de la deuxième position de mesure par rapport à la position de netteté F@.

Avec un pas Δ de -30 μm utilisé pour la première série de courbes de la figure 4A, on peut choisir les courbes d'erreur uniques de plusieurs manières parmi les ensembles F@00 à F@90, puisque ces courbes peuvent être présentes dans plusieurs ensembles. Par exemple :

- *dfc-90* à *dfc-30* correspondant aux courbes V(30-00) à V(90-60) de l'ensemble F@90,

- *dfc-20* à *dfc-10* correspondant aux courbes V(60-30) à V(70-40) de l'ensemble F@50), et

- *dfc-00* à *dfc+60* correspondant aux courbes V(30-00) à V(90-60) de l'ensemble F@00).

Il manque les courbes d'erreur *dfc+70* à *dfc+90*, qui supposent que la deuxième position de mesure peut être 70, 80 ou 90 et la première position 0, 10 ou 30, positions qui ne sont pas couvertes dans la série de courbes associée au pas Δ = -30 μm.

Pour couvrir ces postions, on peut se servir de la série de courbes associée au pas Δ = +30 μm. Cette série permet de choisir des courbes d'erreur allant de *dfc-60* à *dfc+90*.

Ainsi, lorsque la lentille se trouve entre les positions 30 et 60, le système peut décider d'utiliser l'un quelconque des pas -30 ou +30 pour saisir la deuxième image. Lorsque la lentille se trouve entre les positions 0 et 20, le système choisit le pas +30. Enfin, lorsque la lentille se trouve entre les positions 70 et 90, le système choisit le pas -30.

La figure 4B illustre deux jeux de courbes d'erreur schématiques résultant de ces raffinements, associés respectivement aux pas Δ de -30 μm et +30 μm. Chaque jeu comprend seize courbes d'erreur, *dfc-90* à *dfc+60* pour le pas -30, et *dfc-60* à *dfc+90* pour le pas +30. Les courbes ont été représentées comme similaires dans les deux jeux, mais cela n'est généralement pas le cas en pratique.

Différentes techniques de classification de points peuvent être utilisées pour confronter le critère mesuré aux courbes d'erreur stockées, l'objectif étant d'identifier la courbe stockée qui correspond le mieux à la courbe ou critère mesuré. Parmi ces techniques, on peut utiliser la technique des moindres carrés, les machines à vecteurs de support (SVM), l'analyse discriminante linéaire (LDA)...

Compte tenu de la nature des courbes ici, on peut préférer l'analyse LDA. L'une des opérations de cette technique consiste à trouver un nouveau système de coordonnées dans lequel on parvient à mieux discriminer les nuages de points. Dans ce cas, pour diminuer les ressources de calcul, on peut stocker chaque courbe de référence dans le nouveau système de coordonnées plutôt que de laisser le système faire ce calcul à chaque comparaison.

De nombreuses variantes et modifications des modes de réalisation décrits ici apparaîtront à l'homme du métier sans pour autant sortir du cadre de l'invention défini dans les revendications annexées. Les valeurs pour les pas Δ n'ont été indiqués qu'à titre d'exemple. Les valeurs des pas et le nombre de jeux de courbes d'erreur pourront être adaptés par l'homme du métier en fonction du système dans lequel il souhaite les mettre en oeuvre. Le critère d'erreur a été décrit comme un rapport de moyennes radiales de spectres de puissance, mais d'autres méthodes de calcul pourront être utilisées pour fournir un critère représentatif des rapports de spectres de puissance mis en oeuvre.

Les courbes de référence ont été décrites comme produites expérimentalement à partir d'images de référence - elles peuvent également être produites à partir des fonctions PSF fournies par le constructeur pour l'objectif utilisé, ou bien à partir de fonctions PSF mesurées.

## Revendications

**1.** Procédé de réglage d'un objectif pour une prise de vue courante, comprenant les étapes suivantes, réalisées au préalable de la prise de vue courante :

• construire et stocker, pour chaque position de netteté (F@) envisageable de l'objectif, un premier ensemble de critères de référence obtenus pour différentes erreurs de mise au point (dfc) de l'objectif, chaque critère de référence étant obtenu en réalisant les étapes a) -d) suivantes, pour différentes positions de départ possibles dans la plage de réglage de l'objectif :

**a)** régler l'objectif à une première position de mise au point et acquérir une première image d'une scène à travers l'objectif, la première position de mise au point correspondant à une desdites positions de départ possible de l'objectif;
**b)** régler l'objectif à une deuxième position de mise au point et acquérir une deuxième image de la même scène, la deuxième position étant décalée de la première position d'un premier pas de référence (Δ) et l'écart entre la position de netteté envisageable et la deuxième position définissant l'erreur de mise au point ;
**c)** produire des spectres de puissance respectifs (Vp1, Vp2) des première et deuxième images ; et
**d)** produire le critère (V) de référence représentant le rapport des spectres de puissance permettant d'estimer l'erreur de mise au point de l'objectif ;

et, lors de la prise de vue courante ;

**e)** placer l'objectif à une première position choisie et saisir une première image ;
**f)** décaler l'objectif du premier pas de référence (Δ) ;
**g)** saisir une deuxième image dans une même fenêtre ;
**h)** calculer un critère de référence courant (V) à partir des spectres de puissance respectif des première et deuxième images obtenues aux étapes e) et g) ;
**i)** confronter le critère de référence courant produit par la prise de vue courante à l'ensemble des critères de référence stockés ; et
**j)** corriger la position de mise au point de l'objectif en utilisant la position de netteté (F@) associée au critère de référence le plus proche du critère de référence courant.

**2.** Procédé selon la revendication 1, comprenant les étapes suivantes :

• saisir l'image après correction de la position de mise au point de l'objectif ;
• calculer un nouveau critère et le confronter à l'ensemble des critères de référence ; et
• si le critère de référence le plus proche du nouveau critère indique une erreur de mise au point, recommencer une procédure de correction de mise au point.

**3.** Procédé selon la revendication 1, comprenant les étapes suivantes :

• stocker un deuxième ensemble de critères de référence obtenus pour différentes erreurs de mise au point (dfc) de l'objectif, chacun desdits critères de référence étant obtenu en réalisant les étapes a) - d) de la revendication 1, en utilisant un deuxième pas de référence (Δ+30) entre les première et deuxième positions de mise au point ; et
• pour la prise de vue courante, appliquer à l'étape f) le pas de référence le mieux adapté à ladite première position choisie de l'étape e) entre le premier pas et le deuxième pas de référence et utiliser à l'étape i) l'ensemble des critères de référence correspondant au pas de référence appliqué.

**4.** Procédé selon la revendication 1, dans lequel l'ensemble de critères de référence comprend un seul critère de référence par erreur de mise au point.

## Patentansprüche

**1.** Verfahren zur Einstellung eines Objektivs für eine laufende Bildaufnahme, das die folgenden Schritte enthält, die vor der laufenden Bildaufnahme durchgeführt werden:

• Erstellen und Speichern, für jede in Frage kommende Schärfeposition (F@) des Objektivs, einer ersten Einheit von Bezugskriterien, die für verschiedene Fokussierungsfehler (dfc) des Objektivs erhalten werden, wobei jedes Bezugskriterium erhalten wird, indem die folgenden Schritte a)-d) für verschiedene mögliche Ausgangspositionen im Einstellbereich des Objektivs durchgeführt werden:

a) Einstellen des Objektivs auf eine erste Fokussierungsposition und Erlangen eines ersten Bilds einer Szene durch das Objektiv, wobei die erste Fokussierungsposition einer der möglichen Ausgangspositionen des Objektivs entspricht;

b) Einstellen des Objektivs auf eine zweite Fokussierungsposition und Erlangen eines zweiten Bilds der gleichen Szene, wobei die zweite Position zur ersten Position um einen ersten Bezugsschritt (∆) versetzt ist, und die Abweichung zwischen der in Frage kommenden Schärfeposition und der zweiten Position den Fokussierungsfehler definiert;

c) Erzeugen von Leistungsspektren (Vp1, Vp2) des ersten bzw. des zweiten Bilds; und

d) Erzeugen des das Verhältnis der Leistungsspektren darstellenden Bezugskriteriums (V), das es ermöglicht, den Fokussierungsfehler des Objektivs zu schätzen;

und, während der laufenden Bildaufnahme;

e) Anordnen des Objektivs in einer ersten gewählten Position und Erfassen eines ersten Bilds;

f) Versetzen des Objektivs um den ersten Bezugsschritt (∆);

g) Erfassen eines zweiten Bilds in einem gleichen Fenster;

h) Berechnen eines laufenden Bezugskriteriums (V) ausgehend von den Leistungsspektren des ersten bzw. zweiten Bilds, die in den Schritten e) und g) erhalten werden;

i) Konfrontieren des von der laufende Bildaufnahme erzeugten laufenden Bezugskriteriums mit der Einheit der gespeicherten Bezugskriterien; und

j) Korrigieren der Fokussierungsposition des Objektivs unter Verwendung der dem dem laufenden Bezugskriterium am nächsten liegenden Bezugskriterium zugeordneten Schärfeposition (F@).

2. Verfahren nach Anspruch 1, das die folgenden Schritte enthält:

• Erfassen des Bilds nach Korrektur der Fokussierungsposition des Objektivs;

• Berechnen eines neuen Kriteriums und seine Konfrontation mit der Einheit der Bezugskriterien; und

• wenn das dem neuen Kriterium am nächsten liegende Bezugskriterium einen Fokussierungsfehler anzeigt, Wiederbeginn einer Fokussierungsprozedur.

3. Verfahren nach Anspruch 1, das die folgenden Schritte enthält:

• Speichern einer zweiten Einheit von Bezugskriterien, die für verschiedene Fokussierungsfehler (dfc) des Objektivs erhalten werden, wobei jedes der Bezugskriterien erhalten wird, indem die Schritte a)-d) des Anspruchs 1 durchgeführt werden, unter Verwendung eines zweiten Bezugsschritts (∆+30) zwischen der ersten und der zweiten Fokussierungsposition; und

• für die laufende Bildaufnahme, Anwenden im Schritt f) des am besten an die gewählte erste Position des Schritts e) zwischen dem ersten und dem zweiten Bezugsschritt angepassten Bezugsschritts, und Verwenden im Schritt i) der Einheit der Bezugskriterien entsprechend dem angewendeten Bezugsschritt.

4. Verfahren nach Anspruch 1, wobei die Einheit von Bezugskriterien ein einziges Bezugskriterium pro Fokussierungsfehler enthält.

**Claims**

1. Method for adjusting a lens for a current image acquisition, comprising the following steps executed in advance of the current image acquisition:

- constructing and storing, for each feasible sharpness position (F@) of the lens, a first set of reference criteria obtained for different focusing errors (dfc) of the lens, each reference criterion being obtained by executing the following steps a) to d), for different possible starting positions within the adjustment range of the lens:

a) adjusting the lens to a first focusing position and acquiring a first image of a scene through the lens, the first focusing position corresponding to one of said possible starting positions of the lens;

b) adjusting the lens to a second focusing position and acquiring a second image of the same scene, the second position being offset from the first position by a first reference interval ($\Delta$) and the difference between the feasible sharpness position and the second position defining the focusing error;

c) producing respective power spectra (Vp1, Vp2) of the first and second images; and

d) producing the reference criterion (V) representing the ratio of the power spectra, enabling the focusing error of the lens to be estimated;

and, during the current image acquisition:

e) setting the lens at a first chosen position and capturing a first image;

f) offsetting the lens by the first reference interval ($\Delta$);

g) capturing a second image in the same window;

h) calculating a current reference criterion (V) on the basis of the respective power spectra of the first and second images obtained in steps e) and g) ;

i) comparing the current reference criterion produced by the current image acquisition with the stored reference criteria; and

j) correcting the focusing position of the lens by using the sharpness position (F@) associated with the reference criterion closest to the current reference criterion.

2. Method according to Claim 1, comprising the following steps:

- capturing the image after the correction of the focusing position of the lens;
- calculating a new criterion and comparing it with the set of reference criteria; and
- if the reference criterion closest to the new criterion indicates a focusing error, restarting a procedure of focusing correction.

3. Method according to Claim 1, comprising the following steps:

- storing a second set of reference criteria obtained for different focusing errors (dfc) of the lens, each of said reference criteria being obtained by executing steps a) to d) of Claim 1, using a second reference interval ($\Delta$+30) between the first and second focusing positions; and
- for the current image acquisition, applying in step f) the reference interval best adapted to said first chosen position from step e) between the first reference interval and the second reference interval, and using in step i) the set of reference criteria corresponding to the applied reference interval.

4. The method according to Claim 1, wherein the set of reference criteria comprises a single reference criterion for each focusing error.

**Fig 1**

SCENE    *    PSF    + N =    IMAGE

W

**Fig 2A**

FFT

**Fig 2B**

RAVG

**Fig 2C**  Vp1                    Vp2

Vp1/Vp2

**Fig 2D**  V

F@90µm, Δ -30µm

Fig 3A

F@50µm, Δ -30µm

Fig 3B

**Fig 4A**

Δ -30

F@90

F@50

F@10

F@00

V(30-00)... V(90-60)

Δ +30

F@90

F@50

F@10

F@00

V(00-30)... V(60-90)

**Fig 4B**

Δ-30

dfc+60

dfc+50

dfc+40

dfc+30

dfc+00

dfc-90

Δ+30

dfc+90

dfc+80

dfc+70

dfc+60

dfc+30

dfc-60

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130329122 A
- US 2013063566 A1
- US 2014210999 A1